(19) Europäisches Patentamt
European Patent Office
Office européen des brevets

(11) **EP 2 476 202 B1**

(12) **EUROPÄISCHE PATENTSCHRIFT**

(45) Veröffentlichungstag und Bekanntmachung des Hinweises auf die Patenterteilung:
**22.08.2018 Patentblatt 2018/34**

(21) Anmeldenummer: **10747852.1**

(22) Anmeldetag: **27.08.2010**

(51) Int Cl.:
*H02K 11/20* (2016.01)    *H02K 29/06* (2006.01)
*H02P 29/60* (2016.01)    *B25F 5/00* (2006.01)
*H02P 25/18* (2006.01)

(86) Internationale Anmeldenummer:
**PCT/EP2010/062553**

(87) Internationale Veröffentlichungsnummer:
**WO 2011/026792 (10.03.2011 Gazette 2011/10)**

(54) **STEUERBARER GLEICHSTROMMOTOR MIT MODIFIZIERTER KENNLINIE**

CONTROLLABLE DIRECT CURRENT MOTOR WITH A MODIFIED CHARACTERISTIC CURVE

MOTEUR À COURANT CONTINU COMMANDABLE À COURBE CARACTÉRISTIQUE MODIFIÉE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **07.09.2009 DE 102009041878**

(43) Veröffentlichungstag der Anmeldung:
**18.07.2012 Patentblatt 2012/29**

(73) Patentinhaber: **C. & E. Fein GmbH**
**73529 Schwäbisch Gmünd-Bargau (DE)**

(72) Erfinder:
- **DIETL, Lothar**
  **73563 Moegglingen (DE)**
- **SCHREIBER, Alfred**
  **73230 Kirchheim (DE)**
- **GEITNER, Richard E**
  **73431 Aalen (DE)**

(56) Entgegenhaltungen:
**WO-A1-2008/150334    GB-A- 1 051 588**
**US-A1- 2007 210 733**

EP 2 476 202 B1

**Beschreibung**

Die Erfindung betrifft einen steuerbaren Gleichstrom-Motor, ausgestaltet als EC-Motor, der im Vergleich zu einem herkömmlichen Motor eine modifizierte Drehzahl-Drehmoment-Kennlinie aufweist, beispielsweise wie bei einem Motor, der mit einem mechanischen Zweigang-Schaltgetriebe gekoppelt ist.

Im Stand der Technik werden bei Elektrowerkzeugen Motoren in der Regel mit schaltbaren Getrieben gekoppelt, um einen größeren Drehzahl-Drehmoment-Bereich abzudecken. Hierzu sind Zweigang-Maschinen, Dreigang-Maschinen und teilweise sogar Viergang-Maschinen vorgesehen.

Allerdings bedeutet die Verwendung eines schaltbaren Getriebes einen erheblichen Aufwand, verbunden mit einem zusätzlichen Gewichts- und Platzbedarf. Außerdem dürfen mechanische Getriebe nicht im Betrieb unter Last geschaltet werden. Damit fehlt die Möglichkeit, eine optimale Getriebeübersetzung im Betrieb auf die aktuelle Arbeitsbelastung anzupassen.

Aus der DE 10 2004 027 6356 A1 ist ein Elektrowerkzeug mit einer Antriebseinheit mit einem Motor bekannt, der einen Rotor mit einem Dauermagneten sowie einen Stator umfasst, wobei eine Motorsteuerung vorgesehen ist, die so gestaltet ist, dass sie den Motor in einem ersten Drehzahlbereich gemäß einer spannungsgesteuerten Betriebsart ansteuert und in einem zweiten Drehzahlbereich, der sich einem ersten Drehzahlbereich in Richtung einer höheren Drehzahl anschließt, gemäß einem Feldschwächebetrieb ansteuert. Im ersten Drehzahlbereich wird der Motor spannungsgesteuert betrieben, wobei die Motorsteuerung in dieser Betriebsart eine Spannung an den Motor anlegt, um die Drehzahl des Motors vorzugeben. Bei Erreichen einer bestimmten Drehzahl schaltet der Motor in eine andere Betriebsart um, die als Feldschwächebetrieb bezeichnet ist. Hierbei wird die induzierte Gegen-EMK geschwächt, wodurch sich eine höhere Drehzahl bei einem kleineren Drehmoment ergibt. Insgesamt kann so der Motor für eine niedrigere mittlere Drehzahl ausgelegt werden, während zum Erreichen von höheren Drehzahlen auf den Feldschwächebetrieb umgeschaltet wird. Auf diese Weise kann ohne die Verwendung eines schaltbaren mechanischen Getriebes ein erweiterter Drehzahl-Drehmoment-Bereich erreicht werden.

Allerdings handelt es sich hierbei um einen Spezialfall nur für ganz bestimmte Anwendungen, wobei ein Benutzer zur Erhöhung der Drehzahl auf den Feldschwächebetrieb umschalten muss.

Aus der US 2007/0210733 A1 ist ein EC-Motor gemäß dem Oberbegriff von Anspruch 1 bekannt. Hierbei kann die Motorcharakteristik durch eine elektronische Stern-Dreieck-Umschaltung oder durch eine Serien-Parallel-Umschaltung der Phasenwindungen des Motors verändert werden, um in Kombination mit einer Steuerschaltung unterschiedliche Motorcharakteristiken zu erzeugen, die auch in Kombination mit einem Getriebe genutzt werden können.

Obwohl auf diese Weise verschiedene Motorcharakteristiken durch elektronische Umschaltung des Motors erreicht werden können, ist eine weitere Flexibilität des Drehzahl-Drehmoment-Bereiches wünschenswert.

Aus der WO 2008/150334 A1 bzw. der US 2007/0267990 A1 ist ferner ein Elektrowerkzeug mit einem EC-Motor bekannt, dessen Ausgangsmoment in einem ersten Drehzahlbereich mittels einer PWM-Steuerung einstellbar ist und der in einem zweiten Drehzahlbereich mit erhöhter Drehzahl über einen Feldschwächungsbetrieb gesteuert wird.

Auch auf diese Weise können verschiedene Motorchakteristiken erhalten werden. Jedoch ist auch hierbei eine weitere Flexibilität des Drehzahl-Drehmoment-Bereiches wünschenswert.

Der Erfindung liegt die Aufgabe zugrunde, einen Gleichstrom-Motor anzugeben, der einen erweiterten Drehzahl-Drehmoment-Bereich aufweist, wobei eine möglichst flexible Anpassung an verschiedene Anforderungen gewährleistet werden soll.

Diese Aufgabe wird erfindungsgemäß durch einen Gleichstrom-Motor gemäß Anspruch 1 gelöst.

Die Aufgabe der Erfindung wird auf diese Weise gelöst.

Erfindungsgemäß wird der Motor nämlich so ausgelegt oder durch schaltbare Maßnahmen in einen solchen Zustand gebracht, dass die Drehzahl-Drehmoment-Charakteristik gegenüber seinem Normalbetrieb im thermisch stabilen Zustand verändert ist. Dabei wird dem Motor durch die permanent wirksame Steuerschaltung eine Veränderung der Drehzahl-Drehmoment-Kennlinie aufgeprägt. Dabei handelt es sich um eine gezielte Reduzierung zumindest der Drehzahl oder des Drehmoments, um dem Motor die gewünschte neue Leistungscharakteristik aufzuprägen.

In der Regel bedeutet dies, dass allein mit dem Anpassungsmittel der Motor mit einer erhöhten Phasenspannung betrieben würde, die über der Nennspannung liegt, was im Dauerbetrieb zu einer thermischen Überlastung führen würde. Durch die Steuerschaltung erfolgt hierbei eine Begrenzung auf eine veränderte Leistungscharakteristik, so dass in jedem Teilbereich der Drehzahl-Drehmoment-Kennlinie eine thermische Überlastung im Dauerbetrieb ausgeschlossen ist.

Wie nachfolgend noch näher erläutert wird, gibt es auch die Möglichkeit, dass das Anpassungsmittel im sog. Feldschwächebetrieb durch eine Reduzierung der Gegen-EMK nur eine höhere Leerlaufdrehzahl und ein entsprechend reduziertes Stillstandsmoment bewirkt, so dass sich hierdurch grundsätzlich kein Betrieb im potentiell thermischen Überlastbereich ergibt.

Durch die permanent wirksame Steuerschaltung kann jedenfalls eine andere Drehzahl-Drehmoment-Kennlinie aufgeprägt werden, um im Ergebnis eine veränderte Drehzahl-Drehmoment-Kennline zu erhalten. Beispielsweise kann so das Verhalten eines Motors mit einem mechanisch schaltbaren Getriebe simuliert werden.

Durch die permanent wirksame Steuerschaltung kann der Motor für verschiedene Betriebszustände optimal angepasst werden. Es lassen sich so je nach Auslegung des Motors und je nach Auslegung der permanent wirksamen Steuerschaltung Drehzahl-Drehmoment-Kennlinien realisieren, die im Verlauf an bestimmte Sollkennlinien angepasst werden. So kann durch eine geeignete Auslegung beispielsweise ein steilerer Drehzahl-Drehmoment-Verlauf als bei einem herkömmlichen Gleichstrom-Motor sonst gleicher Bauart erreicht werden.

Alternativ oder zusätzlich kann eine Drehzahl-Drehmoment-Charakteristik erreicht werden, die für eine stärkere Nutzung in einem hohen Drehzahlbereich ausgelegt ist und darüber hinaus auch in einem niedrigeren Drehzahlbereich mit höherem Drehmoment geeignet ist.

Hierbei kann die Drehzahl-Drehmoment-Kennlinie je nach Auslegung des Motors und der permanent wirksamen Steuerschaltung auf zahlreiche Sollverläufe angepasst werden, wobei auch das typische Verhalten eines Motors realisiert werden kann, der mit einem Zwei- oder Mehrgang-Getriebe versehen ist.

Im Prinzip wird die erweiterte Drehzahl-Drehmoment-Charakteristik des erfindungsgemäßen Motors durch eine erhöhte Leistung erreicht, die durch die permanent wirksame Steuerschaltung in geeigneter Weise reduziert werden kann, um über den gesamten Drehzahl-Drehmoment-Verlauf eine verbesserte Anpassung an eine gewünschte Leistungscharakteristik bereitzustellen.

Der Motor ist hierbei als EC-Motor ausgebildet. Unter einem EC-Motor versteht man typischerweise eine bürstenlose Gleichstrom-Maschine, bei der der Rotor einen Permanentmagneten umfasst und der Stator aus mehreren Elektromagneten besteht. Die Lage des Rotors wird ständig gemessen, z.B. über die rückwirkende Induktionsspannung, über den resultierenden Strom oder mittels eines Lagegebers, etwa eines Hall-Effekt-Sensors. Auch kann die Lage des Rotors im sensorlosen Betrieb über mathematische Algorithmen ermittelt werden. Die Elektromagneten im Stator werden über eine geeignete Schaltung kommutiert, z.B. über eine Brückenschaltung aus MOSFET-Transistoren.

EC-Motoren eignen sich für die erfindungsgemäße Lösung, da sie ohnehin wegen der elektronischen Kommutierung über eine elektronische Steuerung verfügen und insbesondere da hierbei ein Bürstenfeuer vermieden wird.

Die permanent wirksame Steuerschaltung wird grundsätzlich zur Beeinflussung der Phasenspannung des Motors verwendet, um diese in geeigneter Weise zu begrenzen. Hierzu sind grundsätzlich verschiedene Schaltungen denkbar, wie etwa die Pulsamplitudenmodulation, die Pulsfrequenzmodulation oder die Pulsphasenmodulation. Besonders bevorzugt wird hierzu jedoch die Pulsweitenmodulation (PWM), teilweise auch als Pulsbreitenmodulation bezeichnet, verwendet.

Erfindungsgemäß wird nun eine solchermaßen geeignete Steuerschaltung etwa in Form einer PWM-Steuerung verwendet, um grundsätzlich mit unverändertem Motor einen erweiterten Betriebsbereich des Motors zu erreichen, etwa wie bei einem mit einem mechanischen Zweigang-Getriebe gekoppelten Motor, wobei eine thermische Überlastung im Dauerbetrieb vermieden wird. Hierzu wird der Motor grundsätzlich mit einer höheren Leistung betrieben, als im Dauerbetrieb möglich ist, da sich hierbei eine thermische Überlastung ergeben würde. Die erhöhte Leistung kann entweder dauerhaft vorliegen, indem der Motor beispielsweise mit einer höheren als der Nennspannung betrieben wird, während durch die permanent wirksame Steuerschaltung die Leistung wiederum auf zulässige Werte begrenzt wird.

Bevorzugt ist jedoch ein Anpassungsmittel vorgesehen, das elektronisch schaltbar ist. Hierdurch wird der Motor mit einer höheren Spannung betrieben, als im Dauerbetrieb thermisch zulässig ist. In Kombination mit der permanent wirksamen Steuerschaltung wird die Motorleistung dann wieder auf einen im Dauerbetrieb thermisch zulässigen Wert begrenzt. Durch die Steuerschaltung kann hierbei eine gewünschte Drehzahl-Drehmoment-Charakteristik eingestellt werden.

Wie nun das Anpassungsmittel aufgebaut ist, ist grundsätzlich unerheblich. Es gibt hierzu verschiedene Maßnahmen.

Beispielsweise kann das Anpassungsmittel eine Stern-Dreieck-Umschaltung umfassen. Hierbei werden die einer Phase zugeordneten Spulen (-Gruppen) entweder im Stern oder im Dreieck geschaltet. Bei der Umschaltung von Stern auf Dreieck steigt die Strangspannung um den Faktor $\sqrt{3}$ an. Demnach steigt die Drehzahl ebenfalls um den Faktor $\sqrt{3}$ an, die Maximalleistung verdreifacht sich. Zur Umschaltung werden hierbei vorzugsweise Halbleiterschalter verwendet. Ein solcher Schalter kann auch aus mehreren einzelnen Halbleitern, z.B. aus zwei MOSFETs bestehen.

Gemäß einer weiteren Ausführung der Erfindung umfasst das Anpassungsmittel eine Spulengruppen-Umschaltung in Form einer Reihen-/ Parallelumschaltung.

Hierbei wird die Wicklung einer Spule einer Phase des Elektromotors in zwei gleiche Teilspulen aufgeteilt. Mit drei Halbleiterschaltern können die Teilspulen entweder in Reihe oder parallel geschaltet werden. Im Fall der Reihenschaltung beträgt der ohmsche Gesamtwiderstand 2 R und die Windungszahl 2z, bei Parallelschaltung R/2 und z, wobei R der Widerstand einer Teilspule ist und z die Windungszahl einer Teilspule. Das strangstromproportionale Stillstandsmoment wird sich, wenn die angelegte Spannung U gleich bleibt und keine elektronische oder sonstige Strombegrenzung vorliegt, bei einer Umschaltung von Reihe auf Parallel verdoppeln. Ist der Motor thermisch auf eine Reihenschaltung ausgelegt, so kann die Spulengruppen-Umschaltung zum elektronischen Schalten auf eine Kennlinie mit doppelter Leerlaufdrehzahl genutzt werden.

Gemäß einem weiteren Merkmal der Erfindung umfasst das Anpassungsmittel eine Zellengruppen-Umschaltung in Form einer Reihen-/Parallelumschaltung für die Akkumulatorzellen einer Spannungsversorgung für den Motor.

Wird der Motor aus Akkumulatorzellen versorgt, können diese in zwei gleichartige Zellengruppen aufgeteilt werden. Sind die Zellengruppen parallel geschaltet, so ergibt sich eine unveränderte Spannung bei verdoppelter Stromstärke. Werden die Zellengruppen jedoch in Reihe geschaltet, so ergibt sich eine Verdoppelung der Spannung. Dies kann wiederum mit Halbleiterschaltern realisiert werden. Ist ein an dem Akkupack angeschlossener Elektromotor thermisch auf Parallelschaltung der Zellengruppen ausgelegt, so kann die Umschaltung auf Reihenschaltung zum elektronischen Schalten auf eine Kennlinie mit maximal doppelter Leerlaufdrehzahl genutzt werden.

Vorzugsweise ist das Anpassungsmittel elektronisch steuerbar.

Auf diese Weise kann eine elektronische Steuerung zur Veränderung des Anpassungsmittels mit einer permanent wirksamen Steuerschaltung zur Steuerung des Motors kombiniert werden, wodurch sich eine schnelle elektronische Umschaltung zwischen bevorzugten Betriebsbereichen ergibt.

Grundsätzlich kann der Motor auch durch eine kleinere Windungszahl auf einen für einen Dauerbetrieb thermisch instabilen Zustand ausgelegt sein und durch die Steuerschaltung trotzdem in einem thermisch zulässigen Bereich betrieben werden. Eine kleinere Windungszahl bewirkt nämlich (bei gleich bleibendem Füllfaktor) eine größere Leerlaufdrehzahl und ein größeres Stillstandsmoment.

Das Ergebnis der Umwicklung ist eine Parallelverschiebung der Drehzahl-Drehmoment-Kennlinie nach außen. Die Leerlaufdrehzahl und das Stillstandsmoment werden vergrößert, die Maximalleistung wird gleichfalls vergrößert. Jedoch sind weite Bereiche dieser Kennlinie thermisch nicht mehr stabil.

Durch die Kombination mit der permanent wirksamen Steuerschaltung kann diese neue Kennlinie nun derart korrigiert werden, dass bei Drehzahlen in der Nähe der Leerlaufdrehzahl eine große Ausgangsspannung gewählt wird, so dass die höhere Leerlaufdrehzahl tatsächlich erreicht wird. Bei kleineren Drehzahlen erfolgt eine Absenkung auf einen thermisch zulässigen Bereich. Auf diese Weise kann das Verhalten des Motors an einen Motor angenähert werden, der mit einem Zweigang-Getriebe oder einem Mehrgang-Getriebe gekoppelt ist.

Wie vorstehend bereits erwähnt, kann das Anpassungsmittel auch zur Schwächung der induzierten Gegen-EMK ausgebildet sein.

Während der Motor ohne das Anpassungsmittel als herkömmlicher Motor betrieben wird, ergibt sich bei einer Schwächung der induzierten Gegen-EMK eine erhöhte Drehzahl. Durch die permanent wirksame Steuerschaltung wird nun dem Motor eine veränderte Drehzahl-Drehmomentkennlinie aufgeprägt.

Auch auf diese Weise kann der Motor mit einer veränderten, z.B. mit einer erweiterten Drehzahl-Drehmoment-Charakteristik betrieben werden. Zusätzlich kann eine Beeinflussung durch einen Nutzer oder durch geeignete Parameter vorgesehen werden.

Auch kann das Anpassungsmittel eine stufenlose Verstellung der Phasenlage zwischen dem vom Rotor gelieferten Rotorfeld und dem vom Stator erzeugten Erregerfeld erlauben, wodurch eine Einstellung der Drehzahl ermöglicht wird.

In bevorzugter Weiterbildung der Erfindung ist die Steuerschaltung für eine von mindestens einem Betriebsparameter abhängige Begrenzung der Motorleistung über den gesamten Betriebsbereich im Dauerbetrieb ausgebildet.

Bei dem Betriebsparameter kann es sich bevorzugt um einen Betriebsparameter handeln, der aus der Gruppe ausgewählt ist, die durch die Drehzahl, das Drehmoment, die Stromaufnahme, die Temperaturen und Kombinationen davon gebildet ist.

Die Steuerschaltung wird vorzugsweise zur Steuerung der Leistung des Motors durch Vergleich mindestens eines Betriebsparameters mit zulässigen Werten des Betriebsparameters ausgebildet.

Ferner kann auch die Steuerschaltung zur Steuerung der Phasenspannung des Motors durch Messung des Ist-Wertes mindestens eines Betriebsparameters und anschließende Bestimmung und Realisierung des zugeordneten Wertes der Spannungsabsenkung ausgebildet sein.

Auf diese Weise wird eine Begrenzung der Motorleistung auf einen für den Dauerbetrieb thermisch zulässigen Bereich gewährleistet, wobei eine gezielte Anpassung der Drehzahl-Drehmoment-Charakteristik des Motors auf eine gewünschte Sollcharakteristik ermöglicht ist.

Zulässige Werte des jeweiligen Betriebsparameters können in einem Speicher in Form einer Matrix, eines Kennlinienfeldes oder einer mathematischen Funktion hinterlegt sein.

So kann durch Vergleich der tatsächlichen Betriebsparameter mit den zulässigen Werten für den jeweiligen Betriebsparameter eine automatische Absenkung der Motorleistung auf einen für den jeweiligen Bereich im Dauerbetrieb thermisch zulässigen Wert erzielt werden.

Alternativ können die permanent festgelegten Werte zu den jeweiligen Betriebsparametern in einem Speicher in Form einer Matrix, eines Kennlinienfeldes oder einer mathematischen Funktion hinterlegt sein.

So kann durch Messung der tasächlichen Werte eines Betriebsparameters sofort ein Wert für die Spannungsabsenkung zugeordnet werden. Dieser Wert wird z.B. in Vorversuchen so dimensioniert, dass ein thermisch zulässiger Dauerbetrieb geährleistet ist.

Die Steuerschaltung kann ferner zur Beeinflussung des Anpassungsmittels in Abhängigkeit von den zulässigen Werten für mindestens einen Betriebsparameter ausgebildet sein.

Zusätzlich kann eine lastabhängige Beeinflussung der Motorleistung vorgesehen sein oder eine benutzerabhängige Beeinflussung der Motorleistung, z.B. durch Eingabe über einen Taster.

Vorzugsweise ist hierbei die Steuerschaltung derart ausgebildet, dass sich ein stetiger Übergang bei der Beeinflussung des Anpassungsmittels ausbildet, wobei vorzugsweise mit einer Abhängigkeit vom jeweiligen Betriebsparameter gearbeitet wird.

Gemäß einer weiteren Ausführung der Erfindung ist die Steuerschaltung derart programmiert, dass eine elektronische Umschaltung zur Aktivierung des Anpassungsmittels sensorgesteuert oder durch einen Benutzer abhängig von einer Schalterstellung erfolgt.

So lässt sich eine manuell beeinflussbare oder automatische Umschaltung erzielen.

Hierbei kann die Steuerschaltung gemäß einer weiteren Ausführung der Erfindung auch derart programmiert sein, dass eine automatische Umschaltung erfolgt, um einen Betriebsparameter (innerhalb gewisser Grenzen) konstant zu halten.

Ferner kann der erfindungsgemäße Motor auch mit einem ein- oder mehrstufigen mechanischen Getriebe gekoppelt sein, das schaltbar ausgebildet sein kann.

Hierbei kann eine Umschaltung zwischen verschiedenen mechanischen und elektronischen Schaltstufen vorzugsweise durch einen gemeinsamen Schalter erfolgen.

So lassen sich Elektrowerkzeuge mit deutlich erweiterten Betriebskennlinien erzeugen, ohne dass deutlich stärker dimensionierte Elektromotoren notwendig sind.

Eine Anwendung des erfindungsgemäßen Motors ist insbesondere für Schrauber und Bohrmaschinen von Vorteil, bietet jedoch auch bei anderen Anwendungen (z.B. Winkelschleifern, die beim Schrupp- und Trennbetrieb unterschiedliche Drehzahlen benötigen) Vorteile.

Gemäß einer weiteren ausgestaltung der Erfindung ist ein Sensor zur Erfassung eines zeitabhängigen Anstiegs einer Belastung des Motors vorgesehen, der mit der Steuerschaltung gekoppelt ist, um im Falle der Überschreitung eines vorgegebenen Grenzwerts eine begrenzte Erhöhung der Ausgangsleistung des Motors auszulösen.

Hierbei wird der Motor zeitlich begrenzt mit einer erhöhten Ausgangsleistung betrieben, sofern der Sensor die Überschreitung eines Grenzwertes feststellt, der für die Belastung des Motors charakteristisch ist. Es kann sich hierbei z.B. um das zeitliche Differential der Stromaufnahme $dI/dT$ oder um einen schnellen Drehzahlabfall $-dn/dT$ handeln.

Durch eine solche "Boost-Funktion" arbeitet der Motor kurzfristig mit erhöhter Ausgangsleistung, um etwa ein Hindernis zu überwinden. Es könnte sich beispielsweise um das Auftreffen auf ein Astloch oder auf ein Armiereisen, oder auch um ein Versenken eines Schraubenkopfes in (festes) Material bei einem Bohrvorgang bzw. einem Schraubvorgang handeln.

Vorzugsweise ist die Steuerschaltung zur Absenkung der Ausgangsleistung des Motors auf die Nennleistung oder auf einen Wert darunter ausgebildet, nachdem eine bestimmte Zeitspanne nach Auslösung der begrenzten Erhöhung der Motorleistung abgelaufen ist oder wenn das Produkt aus dem Quadrat des Stroms und der Zeit einen bestimmten Grenzwert erreicht hat.

Durch diese Maßnahme wird sichergestellt, dass der Motor nur kurzfristig mit erhöhter Leistung betrieben wird und rechtzeitig wieder mit Nennleistung oder reduzierter Leistung arbeitet, um eine thermische Überlastung sicher zu vermeiden.

Weitere Merkmale und Vorteile der Erfindung ergeben sich aus der nachfolgenden Beschreibung bevorzugter Ausführungsbeispiele unter Bezugnahme auf die Zeichnung. Es zeigen:

Fig.1       ein Ersatzschaltbild eines erfindungsgemäßen Motors;

Fig. 2 - 4   verschiedene Drehzahl-Drehmoment-Charakteristiken von unterschiedlich ausgelegten erfindungsgemäßen Motoren;

Fig. 5       eine schematische Darstellung einer Stern-Dreieck-Umschaltung;

Fig. 6 a, b   eine Darstellung einer Spulengruppen-Umschaltung zwischen Reihenbetrieb und Parallelbetrieb;

Fig. 7 a, b   eine Darstellung einer Zellengruppen-Umschaltung von zwei Akkumulatorbaugruppen;

Fig. 8 - 13   verschiedene Drehzahl-Drehmoment-Charakteristiken von unterschiedlich ausgelegten erfindungsgemäßen Motoren und

Fig. 14      ein Elektrowerkzeug in stark vereinfachter Darstellung mit einem erfindungsgemäßen Motor.

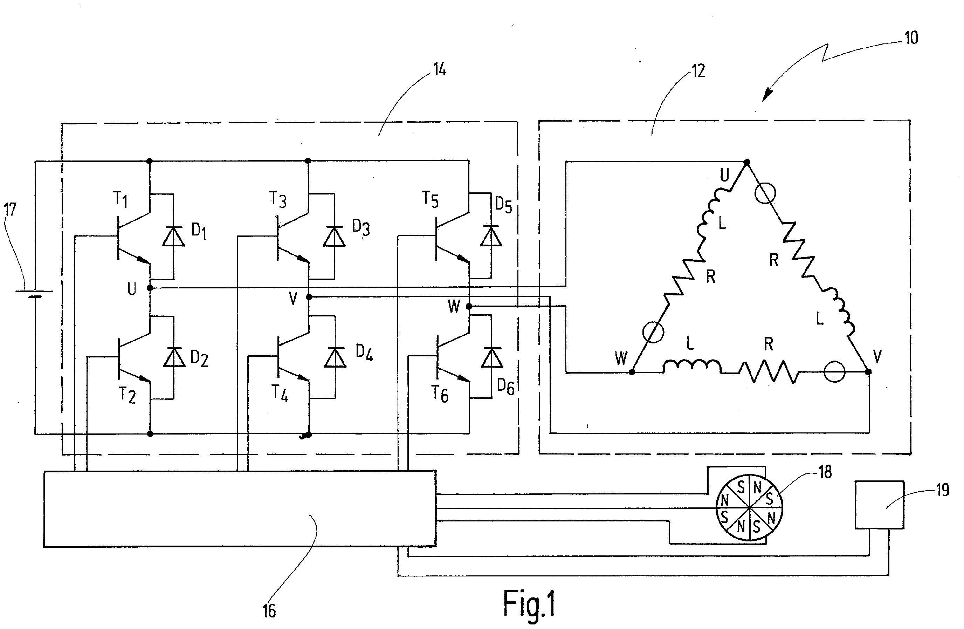

Bei dem erfindungsgemäßen Elektromotor handelt es sich um einen Gleichstrom-Motor, der als EC-Motor ausgebildet ist, also eine bürstenlose Maschine mit Permanentmagnet-Rotor und elektronische Kommutierung. Ein Schaltbild eines derartigen Elektromotors ist in Fig. 1 dargestellt und insgesamt mit 10 bezeichnet.

Der erfindungsgemäße Elektromotor 10 umfasst den Motor 12 im engeren Sinne mit einem Permanent-Magnetrotor (nicht dargestellt) und einem Stator mit drei Statorwicklungen L, deren ohmscher Widerstand R beträgt. Die Statorwicklungen L sind im Dreieck geschaltet und an den Punkten U, V, W mit einer Leistungselektronik 14 verbunden, die zur Ansteuerung des Motors 12 dient. Die Leistungselektronik 14 umfasst drei Transistorbrücken aus Feldeffekttransistoren $T_1$, $T_2$, mit zugeordneten Dioden $D_1$, $D_2$ bzw. $T_3$, $T_4$, mit $D_3$, $D_4$ bzw. $T_5$, $T_6$, mit $D_5$, $D_6$. An den Verbindungspunkten U bzw. V bzw. W sind die Stränge U, V, W angeschlossen. Zur Spannungsversorgung ist ein Akkumulator vorgesehen, der mit 17 bezeichnet ist.

Zur Ansteuerung der Leistungselektronik 14 dient ein Mikrocontroller 16, der eine pulsweitenmodulierte Steuerspannung (PWM) an die Leistungselektronik 14 ausgibt. Die Lage des Rotors wird über einen Lagegeber 18 überwacht, der mit dem Mikrocontroller 16 gekoppelt ist. Alternativ könnte die Lage des Rotors auch ohne Lagegeber z.B. durch Messung der Gegen-EMK bestimmt werden.

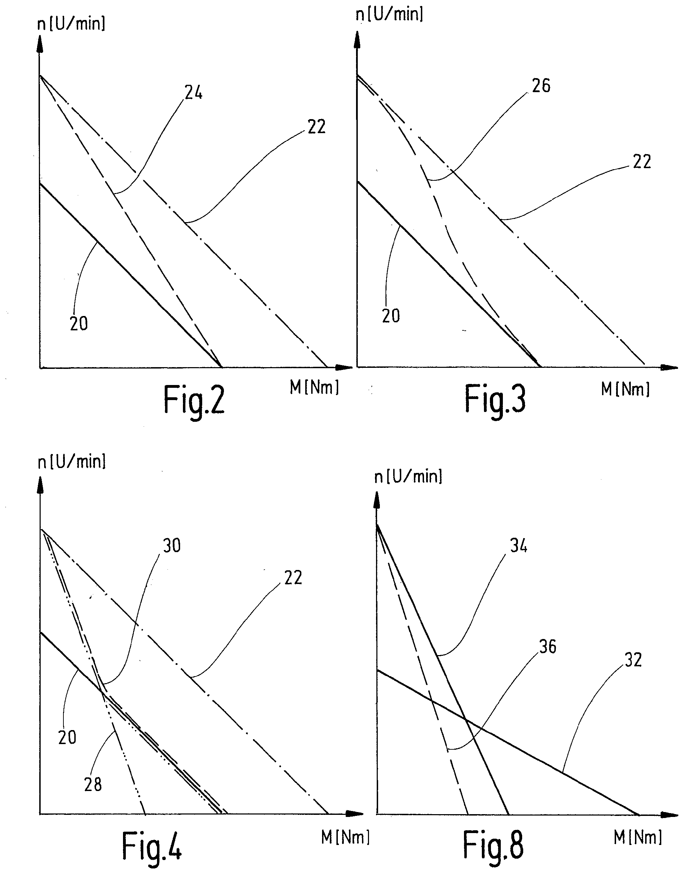

Durch die pulsweitenmodulierte Steuerspannung (PWM-Spannung) wird der Motor mit einer fest vorgegebenen Drehzahl-Drehmoment-Charakteristik betrieben, die von der Charakteristik eines herkömmlichen EC-Motors abweicht. Dies wird im Folgenden anhand der Fig. 2 bis 4 näher erläutert.

In Fig. 2 ist die Kennlinie eines herkömmlichen EC-Motors mit 20 bezeichnet.

Mit der Erfindung werden nun verschiedene Maßnahmen (Anpassungsmittel) bereitgestellt, mit denen ein solcher Motor mit einer veränderten Drehzahl-Drehmoment-Charakteristik betrieben werden kann, beispielsweise wie sie üblicherweise nur in Kombination mit einem mechanisch schaltbaren Getriebe erreichbar ist.

Erfindungsgemäß wird hierzu der Motor mit einer erhöhten Phasenspannung betrieben, die entweder dauerhaft erhöht ist oder durch eine geeignete Maßnahme elektronisch schaltbar erhöht wird, wie nachfolgend noch im Einzelnen beschrieben wird. Eine Erhöhung der Phasenspannung führt zu einer Parallelverschiebung der Drehzahl-Drehmoment-Kennlinie 20, wie in Fig. 2 durch die Kennlinie 22 dargestellt.

Betreibt man einen solchen Motor, der im Normalbetrieb für die Kennlinie 20 ausgelegt ist, mit einer erhöhten Phasenspannung, so dass sich die Kennlinie 22 ergibt, so führt dies nach kurzer Zeit zu thermischer Überlastung. Erfindungsgemäß ist der Motor nun über die Steuerschaltung derart angesteuert, dass die erhöhte Leistung durch die permanent wirksame PWM dauerhaft begrenzt wird. Es kann sich hierbei beispielsweise die neue Drehzahl-Drehmoment-Kennlinie 24 ergeben.

Damit dieser Motor noch in einem thermisch zulässigen Bereich im Dauerbetrieb arbeitet, muss eine entsprechende Anpassung der Wicklungen bzw. entsprechende Belüftungsmaßnahmen vorgenommen werden. Jedenfalls kann mit Hilfe der permanent wirksamen PWM eine beliebige Kennlinie unterhalb der Kennlinie 22 eingestellt werden. Beispielhaft ist hier die Kennlinie 24 dargestellt.

Durch eine Pulsbreitenmodulation einer eingangsseitigen Gleichspannung $U_0$ kann die Ausgangsspannung einer PWM-Schaltung (bei nicht ausschließlich Ohmscher Last) sehr schnell auf einen Wert zwischen $U_0$ und 0 abgesenkt werden. Man kann einen Faktor s definieren mit $1 \leq s < 0$, mit dem sich die Ausgangsspannung U einer PWM-Schaltung als

$$U = s \cdot U_0$$

darstellen lässt.

Der Faktor s ist also das Verhältnis der Ausgangsspannung zur Eingangsspannung und liegt bei Standardanforderungen je nach Auflösung der Schaltung zwischen 1 und etwa 0,01. s kann zeitlich konstant sein, einer periodische Zeitabhängigkeit haben oder einen von gemessenen oder gespeicherten Parameterwerten (z.B. Strom, Drehzahl, Schalterstellung) abhängigen Verlauf haben.

Insbesondere kann s in eine vorhandene Drehzahl-Drehmoment-Kennlinie eines Motors eingearbeitet werden, indem z.B. im Bereich der Leerlaufdrehzahl von $n_0$ bis $0{,}8 \cdot n_0$ s = 1 gesetzt wird. Im Bereich mittlerer Drehzahlen von $0{,}8 \cdot n_0$ bis $0{,}4 \cdot n_0$ könnte s z.B. mit s = 0,3 festgelegt werden und im Bereich kleiner Drehzahlen im Bereich von $0{,}4 \cdot n_0$ bis 0 wird z.B. s = 0,1 gesetzt.

So kann eine durch die Erhöhung der Phasenspannung in einen thermisch unzulässigen Bereich verschobene Drehzahl-Drehmoment-Charakteristik in einer gewünschten Weise angepasst werden, die einer anderen Charakteristik entspricht, die z.B. ein schaltbares mechanisches Getriebe nachbildet.

Ein solcher Fall ist beispielhaft in Fig. 4 dargestellt. Während die Kennlinie 20 die normale Kennlinie eines EC-Motors darstellt, zeigt die Kennlinie 22 wiederum die durch eine Erhöhung der Phasenspannung parallel verschobene Kennlinie. Die Kennlinie 28 zeigt dagegen eine Drehzahl-Drehmoment-Charakteristik, die mit einer mechanischen Übersetzung erzielt wird. Ein schaltbares mechanisches Zweigang-Getriebe wird in Kombination mit dem EC-Motor, also beispielsweise zu einer Kennlinie führen, deren oberer Abschnitt entlang der Kurve 28 verlaufen würde und die dann vom Schnittpunkt mit der Kurve 20 aus abknickt und entlang der Kurve 20 weiterläuft. Eine solche Kennlinie kann mit dem erfindungsgemäßen Motor nachgebildet werden, wie etwa durch die Kennlinie 30 in Fig. 4 angedeutet ist. Um eine sprunghafte Änderung zu vermeiden, wird hierbei der Faktor s nicht sprunghaft geändert, da dies bei Laständerungen zu Regelschwingungen führen kann. Man wählt deshalb im Übergangsbereich s beispielsweise als lineare Funktion der Drehzahl. Anstelle der Drehzahl als unabhängigem Parameter können auch das Drehmoment, die Stromstärke, die Temperatur oder eine Kombination davon gewählt werden.

Fig. 3 zeigt eine weitere Drehzahl-Drehmoment-Charakteristik, die mit 26 bezeichnet ist. Hierbei ermöglicht der Motor eine größere Nutzung im Bereich von hohen Drehzahlen, verbunden mit einer Nutzung im Bereich von niedrigeren Drehzahlen mit hohem Drehmoment.

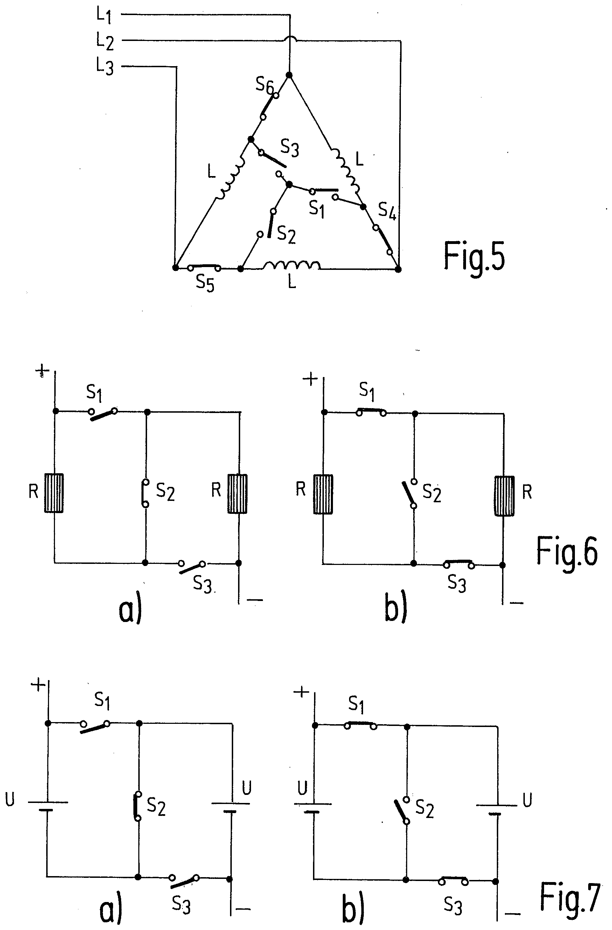

Anhand der Fig. 5 bis 7 wird nunmehr eine Reihe von Maßnahmen näher erläutert, die eine elektronisch schaltbare Erhöhung der Phasenspannung ermöglichen.

Fig. 5 zeigt eine Stern-Dreieck-Umschaltung. Die drei Spulengruppen L des Stators sind in einer Dreiecksschaltung angeordnet, in deren äußeren Zweig jeweils Schalter S4, S5, S6 liegen. Zusätzlich sind die Spulen L vom äußeren Zweig über eine Sternschaltung über die Schalter S1, S2, S3 verbindbar. Sind die Schalter S1, S2, S3 geöffnet und die Schalter S4, S5, S6 geschlossen, so ergibt sich die Dreiecksschaltung. Sind dagegen die Schalter S1, S2, S3 geschlossen und die Schalter S4, S5, S6 geöffnet, so ergibt sich die Sternschaltung. Bei der Umschaltung von Stern auf Dreieck steigt die Strangspannung um den Faktor $\sqrt{3}$ an. Dementsprechend steigt die Drehzahl ebenfalls um den Faktor $\sqrt{3}$, während sich die Maximalleistung verdreifacht.

Zur Umschaltung werden vorzugsweise Halbleiterschalter verwendet. Ein solcher Schalter (S1 bis S6) kann auch aus mehreren einzelnen Halbleitern, z.B. aus zwei MOSFETs bestehen.

Fig. 6 zeigt die Möglichkeit einer Spulen-Umschaltung zur Umschaltung der Spulengruppen zwischen Parallelbetrieb (Fig. 6b) und Reihenbetrieb (Fig. 6a).

Hierbei sei die Wicklung einer Spule einer Phase des Elektromotors durch die Windungszahl 2z, den Drahtdurchmesser d und zwei Anschlüsse gekennzeichnet (2z, d). Sie haben den Ohmschen Widerstand 2R. Die Spule wird in zwei Teilspulen mit (z, d) geteilt, die jeweils den Widerstand R haben.

Werden die in Reihe geschalteten Teilspulen mit einer Spannung U versorgt, ergibt sich ein Strangstrom von:

$$I_{Strang, Reihe} = 2\,z \cdot U / 2R = z \cdot U / R$$

Im Falle der Parallelschaltung liegt an jeder Teilspule die Spannung U. Der Strangstrom der beiden Zweige errechnet sich zu:

$$I_{Strang, Parallel} = 2 \cdot I_{Zweig} = 2\,z \cdot U / R = 2\,I_{Strang, Reihe}.$$

Mit drei Halbleiterschaltern S1, S2, S3 können die Teilspulen in Reihe (S1 und S3 offen, S2 geschlossen, vgl. Fig. 6a)) oder parallel geschaltet werden (S1 und S3 geschlossen, S2 offen, vgl. Fig. 6b)). Im Fall der Reihenschaltung beträgt der Gesamtwiderstand 2R, bei Parallelschaltung R/2. Das stromproportionale Stillstandsmoment wird sich, wenn die angelegte Spannung gleich bleibt und keine elektronische oder sonstige Strombegrenzung vorliegt, bei einer Umschaltung von Reihe auf parallel wegen des doppelten Strangstroms ebenfalls verdoppeln. Bei derselben Schaltrichtung wird sich die Drehzahl wegen der halben Windungszahl bei Parallelschaltung ebenfalls verdoppeln.

Ist der Motor thermisch auf Reihenschaltung ausgelegt, kann die RP-Umschaltung in Verbindung mit einer permanent wirksamen PWM zum elektronischen Schalten auf eine Kennlinie mit doppelter Leerlaufdrehzahl und doppeltem Stillstandsmoment genutzt werden.

Fig. 7 zeigt die Möglichkeit einer Zellengruppen-Umschaltung bei einem Akkumulator, der aus zwei Teilgruppen besteht.

Ein Akkumulator besitze 2m einzelne Akkuzellen (m= 1, 2, .....) mit einer Spannung von jeweils U1 im vollgeladenen Zustand. Die Akkuzellen werden zunächst in zwei Halbpacks mit m Zellen in Reihe geschaltet (fest verdrahtet). Die Gesamtspannung des Halbpacks beträgt U = m • U1. Mit drei Halbleiterschaltungen werden die zwei Halbpacks untereinander in Reihe oder parallel geschaltet. Die Reihenschaltung ist in Fig. 7a) gezeigt. Der Schalter S2 ist geschlossen, während die Schalter S1, S3 geöffnet sind.

Bei der Parallelschaltung ergibt sich dagegen die Stellung gemäß Fig. 7b), wobei der Schalter S2 geöffnet ist und die Schalter S1, S2 geschlossen sind. Es kann also zwischen der Phasenspannung U und 2U umgeschaltet werden. Ist ein an den Akkupack angeschlossener Motor thermisch auf Parallelschaltung der Halbpacks ausgelegt, so kann die Umschaltung auf Reihenschaltung in Verbindung mit der permanent wirksamen PWM zum elektronischen Schalten auf eine Kennlinie mit maximal doppelter Leerlaufdrehzahl genutzt werden.

Darüber hinaus ist es möglich, den Motor grundsätzlich auf eine höhere Drehzahl umzuwickeln, womit dieser im Dauerbetrieb im thermisch instabilen Bereich arbeiten würde. Wiederum wird die permanent wirksame PWM benutzt, um den Motor im thermisch stabilen Bereich zu betreiben.

Ein Elektromotor mit einer Wicklung $(z, d)$ sei thermisch auf eine Nennspannung $U_0$ ausgelegt. Die Leerlaufdrehzahl sei $n_0$. Der Motor wird auf eine andere Wicklung, die bei gleicher Spannung $U_0$ zu einer höheren Leerlaufdrehzahl $x \cdot n_0$ $(x > 1)$ bei gleicher Kennliniensteigung führt, umgewickelt. Dies wird durch eine Änderung der Windungszahl von $z$ auf $z/x$ und eine Änderung des Drahtdurchmessers von $d$ auf $d \cdot \sqrt{x}$ erreicht. Falls $z/x$ keine ganze Zahl ist, kann die nächst liegende ganze Zahl gewählt werden. Als Drahtdurchmesser kann der zu $d \cdot \sqrt{x}$ nächst liegende Normdurchmesser gewählt werden.

Das Ergebnis der Umwicklung ist eine Drehzahl-Drehmoment-Kennlinie, die um den Faktor $x$ parallel verschoben ist. Die Leerlaufdrehzahl und das Stillstandsmoment sind jeweils um den Faktor $x$ größer geworden. Die Maximalleistung wird um den Faktor $x^2$ größer, somit sind weite Bereiche der Kennlinie thermisch nicht mehr stabil.

Durch Kombination mit einer permanent wirksamen PWM kann die neue Kennlinie derart korrigiert werden, dass bei Drehzahlen in der Nähe der Leerlaufdrehzahl $s = 1$ gewählt wird, womit die höhere Leerlaufdrehzahl tatsächlich erreicht wird. Bei kleineren Drehzahlen wird $s$ kontinuierlich auf $s = 1/x$ geändert, um in den thermisch stabilen Bereich der ursprünglichen Kennlinie zu gelangen.

Eine weitere Maßnahme zur Modifizierung der Kennlinie des EC-Motors besteht in einer Schwächung der induzierten Gegen-EMK, was auch als Feldschwächung bezeichnet wird.

Die Feldschwächung kann mit der gleichen Schaltung gemäß Fig. 1 realisiert werden. Hierzu wird lediglich der Mikrocontroller 16 anders programmiert.

In Fig. 8 ist eine Drehzahl-Drehmoment-Kennlinie eines EC-Motors mit Ansteuerung durch eine (elektronisch generierte) Spannung mit konstanter Amplitude, gleichbleibender Signalform und konstanter Phase zur Gegen-EMK linear. Diese mit 32 bezeichnete Kennlinie und ist durch die Leerlaufdrehzahl und das Stillstandsmoment gekennzeichnet. Durch eine Schwächung des Magnetfeldes oder der Gegen-EMK durch Änderung der Phase zwischen Ansteuersignal und Gegen-EMK kann die Steigung der Kennlinie geändert werden. Dabei nimmt die Leerlaufdrehzahl zu, und das Stillstandsmoment nimmt um denselben Faktor ab, vgl. neue Kennlinie 34 in Fig. 8.

Insbesondere durch eine Schwächung der Gegen-EMK kann der Motor schnell auf eine neue Charakteristik umgeschaltet werden.

Hierbei kann man aber nicht immer die gewünschte Kennlinie erreichen, da eine Änderung der Leerlaufdrehzahl und des Stillstandsmomentes bei der Umschaltung zwischen Normalbetrieb (Kennlinie 32) und Feldschwächebetrieb (Kennlinie 34) mit demselben Faktor geschieht.

Erfindungsgemäß ist nun eine derartige Feldschwächung zusätzlich mit der permanent wirksamen PWM kombiniert. Hierdurch lassen sich beliebige Kennlinien unterhalb der beiden Kennlinien 32, 34 erreichen. In Fig. 8 ist dies beispielsweise durch eine Kennlinie 36 dargestellt, die eine steilere Drehzahl-Drehmoment-Charakteristik aufweist.

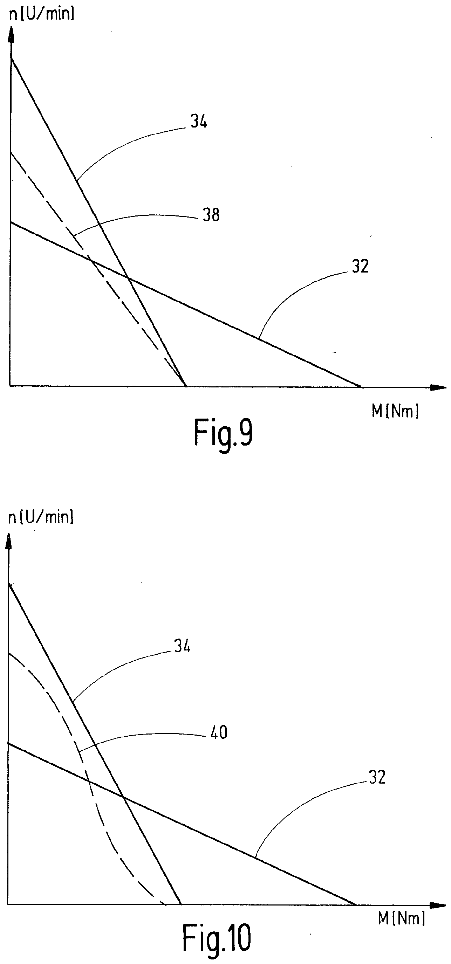

In Fig. 9 ist dagegen eine neue Drehzahl-Drehmoment-Kennlinie 38 dargestellt, die bei gleichem Stillstandsdrehmoment eine geringere Leerlaufdrehzahl aufweist.

In Fig. 10 ist eine weitere denkbare neue Kennlinie 40 dargestellt, die für eine Benutzung bei relativ hohen Drehzahlen mit geringem Drehmoment einerseits und mit relativ hohem Drehmoment bei geringen Drehzahlen andererseits ausgelegt ist. Macht man die Feldschwächung umschaltbar, so lassen sich auch beliebige Kennlinien erzielen, die bis in den unteren Bereich der Kurve 32 bis zum Stillstandsmoment laufen.

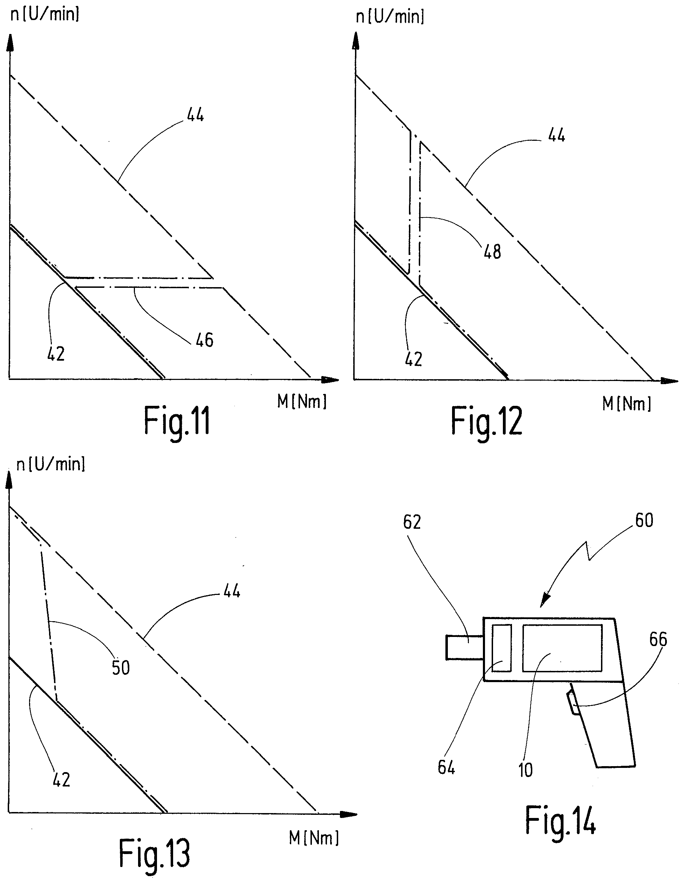

Fig. 11 zeigt eine "Boost-Funktion", bei der der Elektromotor 10 kurzzeitig mit einem erhöhten Drehmoment betrieben wird, um etwa ein Hindernis zu überwinden, das von einem Sensor 19 (Fig. 1) erfasst wird. Wenn der Sensor 19 beispielsweise einen kurzzeitigen Anstieg des Drehmomentes feststellt, der einen bestimmten Grenzwert übersteigt, so wird das Drehmoment von der Normalkennlinie 42 aus kurzzeitig bis auf die parallel verschobene Kennlinie 44 mit erhöhter Strangspannung hochgefahren, wie durch die Kennlinie 46 angedeutet ist. Um eine thermische Überlastung zu vermeiden, wird das Drehmoment nach Ablauf einer vorbestimmten Zeitspanne (z.B. 5 Sekunden) automatisch wieder auf die Normalkennlinie 42 zurück genommen.

Fig. 12 zeigt eine entsprechende Boost-Funktion für die Drehzahl. Stellt der Sensor 19 z.B. ein kurzzeitiges Absinken der Drehzahl fest, das pro Zeiteinheit einen bestimmten Grenzwert überschreitet, so wird der Motor kurzzeitig mit einer erhöhten Drehzahl betrieben, wie durch die Kennlinie 48 angedeutet ist. Auch hier wird die Drehzahl nach kurzer Zeit (z.B. 3 bis 5 Sekunden) wieder auf die Drehzahl gemäß Normalkennlinie 42 zurück genommen.

Fig. 13 zeigt beispielhaft noch einen weiteren Kennlinienverlauf 50, bei dem der Motor im Bereich seiner Leerlaufdrehzahl mit erhöhter Drehzahl gemäß der durch eine erhöhte Strangspannung parallel verschobenen Kennlinie 44 betrieben wird. Übersteigt das Drehmoment jedoch einen bestimmten Grenzwert, so wird die Drehzahl jedoch schneller zurückgefahren, bis wieder der Kennlinienverlauf der Normalkennlinie 42 erreicht ist. Diese Ausnutzung höherer Drehzahl in der Nähe der Leerlaufdrehzahl mit niedrigem Drehmoment ist ohne thermische Überlast möglich, da hier ja ohnehin nicht die Maximalleistung erreicht wird. Dagegen wird die Drehzahl bei höherem Drehmoment schneller zurück genommen, um einen Anstieg der Maximalleistung auf unzulässige Werte für den Dauerbetrieb zu vermeiden.

Fig. 14 zeigt beispielhaft die Anwendung eines erfindungsgemäßen Motors 10 bei einem Elektrowerkzeuges 60 in Form eines Schraubers. Das Elektrowerkzeug 60 weist ein Futter zur Aufnahme eines Werkzeuges auf. Der Motor 10 ist mit einem ein- oder mehrstufigen mechanischen Getriebe 64 gekoppelt, das ggf. auch schaltbar sein kann. Eine benutzerabhängige Beeinflussung der Steuerschaltung kann beispielsweise über einen Drücker 66 erfolgen.

## Patentansprüche

1. Gleichstrom-Motor, ausgebildet als EC-Motor (10), der eine bestimmte Drehzahl-Drehmoment-Kennlinie im Nennbetrieb aufweist, mit einem Anpassungsmittel zur Veränderung zumindest der Drehzahl oder des Drehmoments, wobei das Anpassungsmittel eine Stern-Dreieck-Umschaltung, oder eine Spulengruppen-Umschaltung in Form einer Reihen-/Parallelumschaltung, oder eine Zellengruppen-Umschaltung in Form einer Reihen-/Parallelumschaltung für die Akkumulatorzellen einer Spannungsversorgung für den Motor umfasst, und mit einer permanent wirksamen Steuerschaltung (16) zur Steuerung des Motors (10), die derart programmiert ist, dass die Drehzahl-Drehmoment-Kennlinie gegenüber dem Nennbetrieb oder dem Betrieb mit dem Anpassungsmittel permanent verändert ist, wobei die Steuerschaltung (16) vorzugsweise eine permanent wirksame PWM-Steuerung umfasst, **dadurch gekennzeichnet, dass** das Anpassungsmittel zur Erhöhung der Phasenspannung über die Nennspannung ausgebildet ist und einen Betrieb des Motors mit einer erhöhten Leistung in einem im Dauerbetrieb thermisch unzulässigen Bereich erlaubt, und dass die Steuerschaltung eine permanente Veränderung der Drehzahl-Drehmoment-Kennlinie bewirkt, so dass in jedem Teilbereich der Drehzahl-Drehmoment-Kennlinie eine thermische Überlastung im Dauerbetrieb ausgeschlossen ist.

2. Motor nach Anspruch 1, **dadurch gekennzeichnet, dass** das Anpassungsmittel elektronisch steuerbar ist.

3. Motor nach einem der vorhergehenden Ansprüche, **dadurch gekennzeichnet, dass** der Motor durch eine kleinere Windungszahl bei gleich bleibendem Füllfaktor auf einen für einen Dauerbetrieb thermisch instabilen Zustand ausgelegt ist und durch die Steuerschaltung (16) in einem thermisch zulässigen Bereich betrieben wird.

4. Motor nach einem der vorhergehenden Ansprüche, **dadurch gekennzeichnet, dass** das Anpassungsmittel zur Schwächung der induzierten Gegen-EMK ausgebildet ist.

5. Motor nach einem der vorhergehenden Ansprüche, **dadurch gekennzeichnet, dass** die Steuerschaltung (16) für eine von mindestens einem Betriebsparameter abhängige Begrenzung der Motorleistung über den gesamten Betriebsbereich im Dauerbetrieb ausgebildet ist, wobei der Betriebsparameter vorzugsweise aus der Gruppe ausgewählt ist, die durch die Drehzahl, das Drehmoment, die Stromaufnahme, die Temperatur und Kombinationen davon gebildet ist.

6. Motor nach einem der vorhergehenden Ansprüche, **dadurch gekennzeichnet, dass** die Steuerschaltung (16) zur Steuerung der Leistung des Motors durch Vergleich mindestens eines Betriebsparameters mit zulässigen Werten des Betriebsparameters ausgebildet ist, oder bei dem die Steuerschaltung (16) zur Steuerung der Phasenspannung des Motors durch Messung des Istwertes mindestens eines Betriebsparameters und anschließende Bestimmung und Realisierung des zugeordneten Wertes der Spannungsänderung ausgebildet ist.

7. Motor nach Anspruch 5 oder 6, **dadurch gekennzeichnet, dass** ein Speicher zur Hinterlegung von zulässigen Werten von Betriebsparametern in Form einer Matrix, eines Kennlinienfeldes oder einer mathematischen Funktion vorgesehen ist, wobei vorzugsweise ein Speicher zur Hinterlegung von Werten der Spannungsabsenkung für bestimmte Betriebsparameter in Form einer Matrix, eines Kennlinienfeldes oder einer mathematischen Funktion vorgesehen ist.

8. Motor nach einem der Ansprüche 5 bis 7, **dadurch gekennzeichnet, dass** die Steuerschaltung (16) zur lastabhängigen Beeinflussung der Motorleistung ausgebildet ist, und/oder bei dem ein Schalter oder Steller für eine benutzerabhängige Beeinflussung der Motorleistung vorgesehen ist.

9. Motor nach einem der Ansprüche 5 bis 8, **dadurch gekennzeichnet, dass** die Steuerschaltung (16) zur Beeinflussung des Anpassungsmittels in Abhängigkeit von den zulässigen Werten für den mindestens einen Betriebsparameter ausgebildet ist.

**10.** Motor nach Anspruch 9, **dadurch gekennzeichnet, dass** die Steuerschaltung (16) zum stetigen Übergang bei der Beeinflussung des Anpassungsmittels ausgebildet ist, vorzugsweise mit einer Abhängigkeit vom jeweiligen Betriebsparameter.

**11.** Motor nach einem der Ansprüche 1 bis 10, **dadurch gekennzeichnet, dass** die Steuerschaltung (16) derart programmiert ist, dass eine elektronische Umschaltung zur Aktivierung des Anpassungsmittels sensorgesteuert oder durch einen Benutzer abhängig von einer Schalterstellung erfolgt.

**12.** Motor nach Anspruch 11, **dadurch gekennzeichnet, dass** die Steuerschaltung (16) derart programmiert ist, dass eine automatische Umschaltung erfolgt, um einen Betriebsparameter konstant zu halten.

**13.** Motor nach einem der vorhergehenden Ansprüche, **gekennzeichnet durch** eine Kopplung mit einem ein- oder mehrstufigen mechanischen Getriebe gekoppelt, wobei vorzugsweise eine Umschaltung zwischen verschiedenen mechanischen und elektronischen Schaltstufen durch einen gemeinsamen Schalter erfolgt.

**14.** Motor nach einem der vorherigen Ansprüche, **gekennzeichnet durch** einen Sensor zur Erfassung eines zeitabhängigen Anstiegs einer Belastung des Motors, der mit der Steuerschaltung (16) gekoppelt ist, um im Falle der Überschreitung eines vorgegebenen Grenzwerts eine zeitlich begrenzte Erhöhung der Ausgangsleistung des Motors auszulösen.

**15.** Motor nach Anspruch 14, **dadurch gekennzeichnet, dass** die Steuerschaltung (16) zur Absenkung der Ausgangsleistung des Motors auf die Nennleistung oder auf einen Wert darunter ausgebildet ist, nachdem eine bestimmte Zeitspanne nach Auslösung der begrenzten Erhöhung der Motorleistung abgelaufen ist oder nachdem das Produkt aus dem Quadrat des Stroms und der Zeit einen bestimmten Grenzwert erreicht hat.

**Claims**

**1.** Direct-current motor, configured as an EC motor (10), which has a specific speed/torque characteristic during rated operation, with an adjusting means for varying at least the speed or torque, wherein the adjusting means comprises a star-delta switchover, or a coil assembly switchover in the form of a series/parallel switchover, or a cell assembly switchover in the form of a series/parallel switchover for the accumulator cells of a power supply for the motor, and with a permanently acting control circuit (16) for controlling the motor (10), which is programmed such that the speed/torque characteristic is permanently changed relative to the rated operation or operation with the adjusting means, wherein the control circuit (16) preferably comprises a permanently acting PWM control, **characterised in that** the adjusting means is designed to increase the phase voltage via the rated voltage and allows the operation of the motor with an increased output in a range that is not thermally permissible in continuous operation, and **in that** the control circuit ensures a permanent change of the speed/torque characteristic so that in each portion of the speed/torque characteristic thermal overload is prevented in continuous operation.

**2.** Motor according to claim 1, **characterised in that** the adjusting means can be controlled electronically.

**3.** Motor according to any of the preceding claims, **characterised in that** the motor is configured by having a lower number of turns with an unvarying fill factor for a thermally instable state for continuous operation and is operated by the control circuit (16) in a thermally permissible range.

**4.** Motor according to any of the preceding claims, **characterised in that** the adjusting means is designed for weakening the induced counter EMF.

**5.** Motor according to any of the preceding claims, **characterised in that** the control circuit (16) is configured for limiting the motor output as a function of at least one operating parameter over the entire operating range during continuous operation, wherein the operating parameter is preferably selected from a group consisting of speed, torque, current consumption, temperature and combinations thereof.

**6.** Motor according to any of the preceding claims, **characterised in that** the control circuit (16) is configured for controlling the output of the motor on the basis of comparing at least one operating parameter with permissible values of the operating parameter, or the control circuit (16) is configured for controlling phase voltage of the motor by measuring the actual value of at least one operating parameter and subsequent determination and implementation of the associated value of the voltage change.

**7.** Motor according to claim 5 or 6, **characterised in that** a memory is provided for storing permissible values of operating parameters in the form of a matrix, a family of characteristics or a mathematical function, whereby preferably a memory is provided for storing values for reducing voltage for specific operating parameters in the form a matrix, a family of characteristics or a mathematical function.

**8.** Motor according to any of claims 5 to 7, **characterised in that** the control circuit (16) is configured for influencing motor output as a function of load of said motor, and/or a switch or actuator is provided for influencing the motor output as a function of a user.

**9.** Motor according to any of claims 5 to 8, **characterised in that** the control circuit (16) is configured to influence the adjusting means as a function of permissible values for the at least one operating parameter.

**10.** Motor according to claim 9, **characterised in that** the control circuit (16) is configured for continuous transition when influencing the adjusting means, preferably depending on the respective operating parameter.

**11.** Motor according to any of claims 1 to 10, **characterised in that** the control circuit (16) is programmed such that an electronic switchover for activating the adjusting means is controlled by sensor or is performed by a user dependent on a switch position.

**12.** Motor according to claim 11, **characterised in that** the control circuit (16) is programmed such that an automatic switchover takes place to keep an operating parameter constant.

**13.** Motor according to any of the preceding claims, **characterised by** a coupling with a single or multiple-stage mechanical transmission, wherein preferably there is a switchover between various mechanical and electronic shift stages by means of a common switch.

**14.** Motor according to any of the preceding claims, **characterised by** a sensor for detecting a time-dependent increase in load on said motor, which sensor is coupled to the control circuit (16) for initiating an increase in output power of the motor, over a limited time, if a predetermined threshold value is exceeded.

**15.** Motor according to claim 14, **characterised in that** the control circuit (16) is configured for reducing the output power of the motor to the rated output or to a value below this, after a specific time interval has passed after initiating the limited increase of motor output or after the product of the square of current and time has reached a specific threshold value.

**Revendications**

**1.** Moteur à courant continu, réalisé en tant que moteur à commutation électronique (moteur EC) (10), qui présente une courbe caractéristique vitesse de rotation - couple de rotation définie en régime nominal, avec un moyen d'adaptation servant à modifier au moins la vitesse de rotation ou le couple de rotation, dans lequel le moyen d'adaptation comprend une commutation étoile-triangle, ou une commutation de groupes de bobines sous la forme d'une commutation en série/en parallèle, ou une commutation de groupes de cellules sous la forme d'une commutation en série/parallèle pour les cellules d'accumulateur d'une alimentation en tension pour le moteur, et avec un circuit de commande (16) actif en permanence servant à commander le moteur (10), qui est programmé de telle manière que la courbe caractéristique vitesse de rotation - couple de rotation est modifiée en permanence par rapport au régime nominal ou au régime avec le moyen d'adaptation, dans lequel le circuit de commande (16) comprend de préférence une commande PWM (à modulation de largeur d'impulsion) active en permanence, **caractérisé en ce que** le moyen d'adaptation est réalisé pour élever la tension de phase au-dessus de la tension nominale et permet un régime du moteur à une puissance élevée dans une plage non admise sur le plan thermique lors du fonctionnement prolongé, et que le circuit de commande entraîne une modification permanente de la courbe caractéristique vitesse de rotation-couple de rotation de sorte qu'une surcharge thermique lors du fonctionnement prolongé soit exclue dans chaque partie de la courbe caractéristique vitesse de rotation-couple de rotation.

**2.** Moteur selon la revendication 1, **caractérisé en ce que** le moyen d'adaptation peut être commandé de manière électronique.

**3.** Moteur selon l'une quelconque des revendications précédentes, **caractérisé en ce que** le moteur est configuré sur un état instable sur le plan thermique pour un fonctionnement prolongé du fait d'un nombre de spires plus petit pour un facteur de remplissage constant et fonctionne grâce au circuit de commande (16) dans une plage admise sur le plan thermique.

**4.** Moteur selon l'une quelconque des revendications précédentes, **caractérisé en ce que** le moyen d'adaptation est réalisé pour affaiblir la FCEM (force contre-électromotrice) induite.

**5.** Moteur selon l'une quelconque des revendications précédentes, **caractérisé en ce que** le circuit de commande (16) est réalisé en vue d'une limitation de la puissance de moteur en fonction d'au moins un paramètre de fonctionnement sur l'ensemble de la plage de fonctionnement lors du fonctionnement prolongé, dans lequel le paramètre de fonctionnement est choisi de préférence dans le groupe, qui est formé par la vitesse de rotation, le couple de rotation, la consommation de courant, la température et des combinaisons de ceux-ci.

**6.** Moteur selon l'une quelconque des revendications précédentes, **caractérisé en ce que** le circuit de commande (16) est réalisé pour commander la puissance du moteur en comparant au moins un paramètre de fonctionnement à des valeurs admises du paramètre de fonctionnement, ou dans lequel le circuit de commande (16) est réalisé pour commander la tension de phase du moteur en mesurant la valeur réelle d'au moins un paramètre de fonctionnement et en définissant et réalisant immédiatement après la valeur associée du changement de tension.

**7.** Moteur selon la revendication 5 ou 6, **caractérisé en ce qu'**une mémoire est prévue pour enregistrer des valeurs admises de paramètres de fonctionnement sous la forme d'une matrice, d'un champ de courbes caractéristiques ou d'une fonction mathématique, dans lequel de préférence une mémoire est prévue pour enregistrer des valeurs de la baisse de tension pour des paramètres de fonctionnement définis sous la forme d'une matrice, d'un champ de courbes caractéristiques ou d'une fonction mathématique.

**8.** Moteur selon l'une quelconque des revendications 5 à 7, **caractérisé en ce que** le circuit de commande (16) est réalisé pour influer en fonction de la charge sur la puissance de moteur et/ou dans lequel un commutateur ou un système de réglage est prévu pour influer en fonction de l'utilisateur sur la puissance de moteur.

**9.** Moteur selon l'une quelconque des revendications 5 à 8, **caractérisé en ce que** le circuit de commande (16) est réalisé pour influer sur le moyen d'adaptation en fonction des valeurs admises pour l'au moins un paramètre de fonctionnement.

**10.** Moteur selon la revendication 9, **caractérisé en ce que** le circuit de commande (16) est réalisé aux fins d'une transition permanente lors de l'influence sur le moyen d'adaptation, de préférence avec une dépendance au paramètre de fonctionnement respectif.

**11.** Moteur selon l'une quelconque des revendications 1 à 10, **caractérisé en ce que** le circuit de commande (16) est programmé de telle manière qu'une commutation électronique est effectuée pour activer le moyen d'adaptation par une commande de capteur ou par un utilisateur en fonction d'une position de commutateur.

**12.** Moteur selon la revendication 11, **caractérisé en ce que** le circuit de commande (16) est programmé de telle manière qu'une commutation automatique est effectuée pour maintenir constant un paramètre de fonctionnement.

**13.** Moteur selon l'une quelconque des revendications précédentes, **caractérisé par** un couplage avec un engrenage mécanique à un ou à plusieurs paliers, dans lequel de préférence une commutation entre différents paliers de commutation mécaniques ou électroniques est effectuée par un commutateur commun.

**14.** Moteur selon l'une quelconque des revendications précédentes, **caractérisé par** un capteur servant à détecter une augmentation en fonction du temps d'une contrainte exercée sur le moteur, qui est couplé au circuit de commande (16) pour déclencher, dans le cas du dépassement d'une valeur limite prédéfinie, une élévation limitée dans le temps de la puissance de départ du moteur.

**15.** Moteur selon la revendication 14, **caractérisé en ce que** le circuit de commande (16) est réalisé afin de baisser la puissance de départ du moteur sur la puissance nominale ou sur une valeur inférieure, après qu'un intervalle de temps défini après le déclenchement de l'élévation limitée de la puissance de moteur a expiré ou après que le produit issu du carré du courant et du temps a atteint une valeur limite définie.

Fig.1

Fig.2

Fig.3

Fig.4

Fig.8

L₁

L₂

L₃

Fig.5

a)

b)

Fig.6

a)

b)

Fig.7

n [U/min]

34

38

32

Fig.9

M [Nm]

n [U/min]

34

40

32

Fig.10

M [Nm]

n [U/min]

44

42

46

## Fig.11

M [Nm]

n [U/min]

44

48

42

## Fig.12

M [Nm]

n [U/min]

44

50

42

## Fig.13

M [Nm]

62

60

66

64

10

## Fig.14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1020040276356 A1
- US 20070210733 A1
- WO 2008150334 A1
- US 20070267990 A1